(19) Europäisches Patentamt

European Patent Office

Office européen des brevets

(11) EP 0 882 952 A2

## (12) EUROPEAN PATENT APPLICATION

(43) Date of publication:
09.12.1998 Bulletin 1998/50

(51) Int Cl.$^6$: G01F 15/00

(21) Application number: 98304403.3

(22) Date of filing: 04.06.1998

(84) Designated Contracting States:
AT BE CH CY DE DK ES FI FR GB GR IE IT LI LU MC NL PT SE
Designated Extension States:
AL LT LV MK RO SI

(30) Priority: 04.06.1997 GB 9711409

(71) Applicant: Bristol Water Enterprises Limited
Bristol BS99 7AU (GB)

(72) Inventor: Harris, Charles Gerrard
Badminton, Sth Gloucestershire GL9 1BB (GB)

(74) Representative: Brown, Michael Stanley
Alpha and Omega
Chine Croft
East Hill
Ottery St. Mary Devon EX11 1PJ (GB)

(54) **Flow measurement**

(57) A method of measuring minimum flow using a flow meter which generates pulses in response to flow. The time intervals between successive pulses are measured and the time interval measurements are then converted to flow measurements. Action is taken to take account of "measurement artefact" and/or "hydraulic transient artefact" and/or "hydraulic cyclic artefact".

Fig 1

## Description

### Field of the Invention

This invention relates to flow measurement, and is particularly concerned with the measurement of flow for use in determination of leakage in water distribution systems.

Measurement of leakage in water mains and other distribution systems is important in view of increased water consumption, reduced rainfall and Government attention to the problems of leakage.

Since water usage is continuous, leakage from the water mains is difficult to measure and, in the United Kingdom, it is estimated by measuring flow at night.

A conventional electric water meter generates an electrical pulse after a predetermined volume of water has passed through the meter. In practice, the meter usually controls the opening and closing of a switch to create a train of pulses from an external source of electricity, which may be the battery of a data logger.

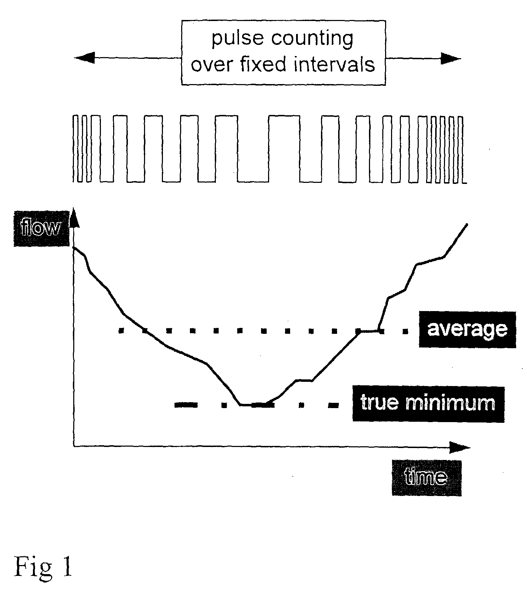

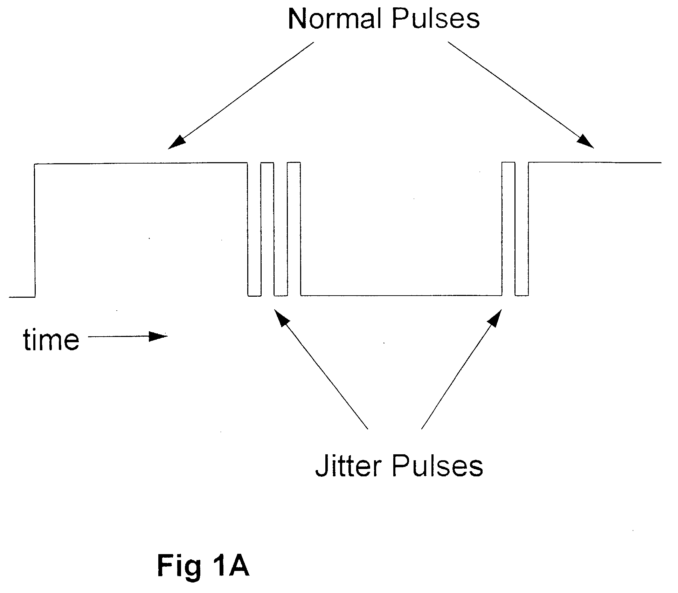

The information represented by the production of the pulses is normally analysed by counting the number of pulses produced per unit time. This, however, produces results which suggest that the minimum flow rate is higher than that which actually occurs, as will be seen from Figure 1 of the accompanying drawings.

Pulses from a meter are counted over fixed intervals, typically 15 minutes, during the night. Since individual pulses are scaled to represent known volumes of water, the 15 minute pulse count will give a result corresponding to the average flow rate during the 15 minute interval. As will be seen from Figure 1, this measured average can be significantly greater than the actual minimum flow rate.

Water flow is also measured using analogue meters which output voltage or current values related to the measured flow but these also measure an average value, typically over a 15 minute period.

It is accordingly an object of the present invention to provide an improved method of measuring minimum flow using a flow meter.

### Summary of the Invention

According to a first aspect or feature of the present invention there is provided a method of measuring minimum flow which includes taking account of "measurement artefact" and/or "hydraulic transient artefact" and/or "hydraulic cyclic artefact".

The term "measurement artefact" refers to factors arising as a result of inherent variations of meter output. The term "hydraulic transient artefact" refers to variations arising as a result of surge-related oscillations, and the term "hydraulic cyclic artefact" refers to factors arising as a result of cyclic variations,

The measurement method may be carried out using a flow meter which generates pulses in response to flow, the method comprising measuring the intervals between successive pulses and converting the time interval measurements to flow measurements.

The time intervals may be measured between the leading edges of successive pulses or between the trailing edges of successive pulses, or some other combination.

With some meters, bounce or jitter may occur when outputs change from high to low levels or vice versa. This jitter introduces spurious short period pulses as illustrated in Figure 1A. To compensate for this effect, the arrangement will be such that, having detected a potential leading edge, that leading edge will be ignored if the next "falling" edge is less than a specified number of milliseconds away, with a similar arrangement if time intervals are being measured between successive trailing edges or some other combination. For measurement systems involving domestic dwellings, typical time intervals being measured may be in the range of from 0.5 seconds to 60 or more seconds and the specified number of milliseconds may be 40 milliseconds.

According to a second aspect or feature of the present invention there is provided a method of measuring minimum flow using a flow meter, which method comprises obtaining a number of measurements by the method defined above and ascertaining the optimum number of measurements over which to average to obtain an accurate flow measurement.

The invention further provides a method of determining leakage which includes carrying out the method of measurement defined above.

According to a further aspect or feature of the invention there is provided a measurement system comprising a data logger and analysis computer in combination, the logger and computer being adapted to perform the measurement method(s) of the first and/or second aspects as defined above.

The data logger may be adapted merely to measure and memorise the individual time intervals or, if using an analogue meter, the output voltage or current values, with the other steps of the method being performed by the computer, under control of suitable software. Alternatively, the data logger may be adapted to perform all the steps. Again, other allocations of steps between the logger and the computer are possible.

In order to improve the accuracy of the measurements, account is taken, as referred to above, of inherent variations of meter output, such inherent variations being referred to herein as "measurement artefact".

Hydraulic disturbances such as, for example, the starting of pumps, can generate major transients or surges in pipelines causing flows to oscillate about mean levels for a significant length of time. The oscillations are significant and can occur in all networks. Previous measurement systems have not been able to distinguish surge-decelerated flows from genuine dips caused by low demand.

In carrying out the present invention, account is taken, as mentioned above, of surge-related oscillations, such variations being referred to herein as "hydraulic transient artefact".

In many networks, there is a tendency towards low amplitude cyclic behaviour. This is not a transient effect, as it tends to occur continuously. Possible causes include PRV (Pressure regulating valve) hunting and pipework resonance.

In carrying out the present invention, account is taken, as mentioned above, of such cyclic variations, which are referred to herein as "hydraulic cyclic artefact".

The statistical analysis of the measurements which are obtained is preferably such as to provide for separation of the user flow and leakage values. A further feature of the present invention is thus that it enables an estimate to be made of intermittent water consumption by industrial, trade or other exceptional users. Conventionally, this use has been difficult to quantify because it is variable, but inaccurate estimates lead to confusion as to the likely level of leakage in a network.

Many water distribution systems include pressure regulating valves which are designed to stabilise the water pressure at a predetermined pressure. It has been assumed, in the past, that there will accordingly only be minor variations from the norm where such pressure regulating valves are provided. It is a further object of the present invention to provide means for investigating the effectiveness of the pressure regulating valve systems.

According to this aspect of the present invention there is provided a method of measurement or a measurement system as defined above in which a high resolution read-out is obtained of both flow and pressure against time.

It is common practice to investigate water consumption patterns of small groups of, typically, 1 to 200 statistically representative households served by single feed networks. Of particular interest in these networks is the minimum night flow as this will be at or very near the leakage level. Any flow above this level may be treated as water consumption by users.

The present invention, as described in detail below, enables the minimum flow to be determined more accurately than previously utilised methods. It may be adapted to record the pressure at the feed point of a network accurately synchronised with the minimum flow measurement. Then, for a large number of readings of minimum flows and associated pressures from the same site or group of sites, it is possible to determine an empirical relationship between leakage and pressure. This is important for the control and measurement of leakage.

## Brief Description of the Drawings

Figure 1 is a graph of flow recordings showing how conventional pulse counting hides true minima,

Figure 1A shows the type of pulse output which can be obtained using some kinds of meters,

Figure 2 shows the results obtained using two types of pulse output device under nominally steady flow conditions,

Figure 2A is a polar plot of compensation coefficients,

Figure 2B shows a practical application,

Figure 2C shows unstable oscillatory variation at PIT level for stable but different flows on the same meter.

Figure 3 shows two high-resolution views of nightlines taken from the same PRV-controlled district meter area,

Figure 4 shows the autocorrelation plots for the data shown in Figure 3,

Figure 5 shows the results obtained from a non-PRV-controlled site, plot A showing the flow measurements and plot B showing the corresponding autocorrelation function,

Figure 6 shows how the normal flow pattern in a nightline can be disturbed by a sudden hydraulic disturbance,

Figure 7 is a probability model in tabular form

Figure 7.1 is a statistical model of nightline flow,

Figure 8 is a tabulation of leakage estimates for a selected district meter area in which pattern changes are evident during the sequence of nightline values,

Figure 8A shows trial results for leakage estimates from a site with 1386 properties,

Figure 8B shows trial results for the consumption estimates for the same properties,

Figure 8C shows further test results,

Figure 9 shows the effects of substantial pressure variations,

Figure 10 is a chart showing an analysis of consumption monitor data, and

Figure 11 shows further test results.

## Description of the Preferred Embodiment

Figure 1 has been referred to above. It shows the generation of a series of pulses having clearly defined trailing and leading edges. It also shows that, during the time period in which the pulses are being generated, there are substantial differences between the time intervals between successive pulses.

## Measurement Artefact

The Pulse Interval Timing Value (or PIT value) is the time between the leading edges (or the trailing edges) of adjacent pulses of a train of pulses generated by a pulse-type meter.

With some flow meters, the contours of the pulses are as shown in Figure 1. In other instances, the pulse contours can be as shown in Figure 1a. The "jitter" or bounce effect shown in Figure 1a can apply to either the leading or the trailing edge of a pulse. If, therefore, the time intervals between successive leading edges are being measured, the system will be so programmed that, having detected a potential leading edge, that leading edge will be ignored if the next "falling" edge is less than, for example, 40 milliseconds away. This threshold time, e.g. typically 40 milliseconds, is chosen so that genuine short period pulses associated with high flows are not incorrectly rejected. A similar arrangement would apply to the trailing edges if the time intervals being measured were those between the trailing edges of successive pulses.

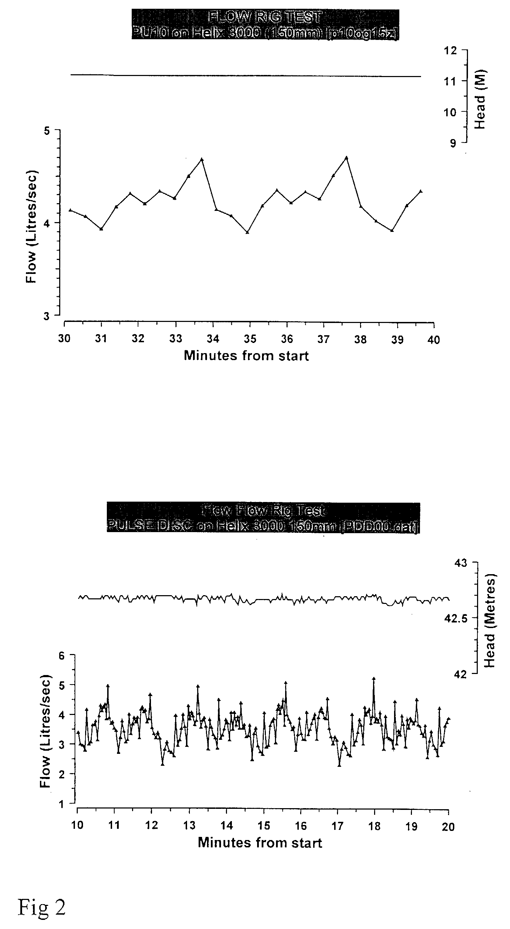

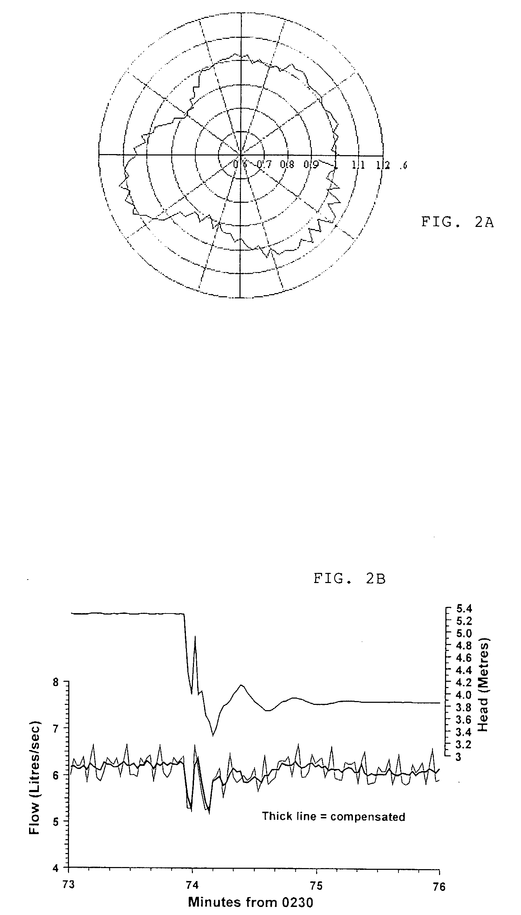

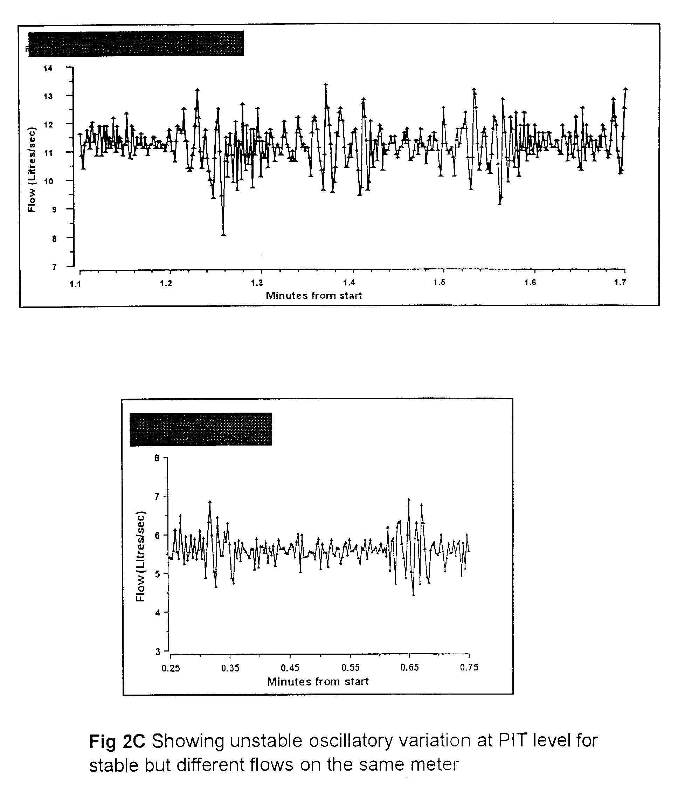

In a perfect system, all the PIT values measured on the pulse head of a typical meter under constant flow will be substantially equal. In practice, substantial pulse to pulse variation will be encountered. With some pulse heads, this variation appears to be cyclic over the number of segments in the device and Figure 2 shows examples of such behaviour for two types of pulse output device under nominally steady flow conditions on the same meter body. The variation is also sensitive to interaction effects between the pulse output device and the meter. The cyclic pattern changes if a given pulse head is swapped between two meter bodies.

This inherent variation, which is independent of flow, is referred to herein as "measurement artefact" and has to be accounted for when carrying out measurements at high resolution.

### 1.1 Compensation calculations

Let $PIT_1$ be the first pulse interval time, which is generated by internal segment 1 of a pulse output device which generates 100 pulses for each complete revolution of the pulse head,

let $PIT_2$ be the second pulse interval time, which is generated by internal segment 2,

..................

Let $PIT_{1082}$ be the one thousand and eighty second pulse interval time, which is generated by segment 82 on the 11th cycle,

...................etc.

Over the measurement time, the logger reads in and stores all the PIT values from the pulse head in the sequence in which they were generated. Say we are using a pulse head which generates one hundred pulses for each complete revolution of the pulse head and have collected 2000 PIT values, i.e. 20 revolutions worth of PIT values. A set of adjustment coefficients is calculated as follows:

Coefficient for segment 1 = $((PIT_1 + PIT_{101} + PIT_{201} + ..... + PIT_{1901})/20)$ / Average of all the PIT values

Coefficient for segment 2 = (($PIT_2$ +$PIT_{102}$+$PIT_{202}$+ .....+$PIT_{1902}$)/20) / Average of all the PIT values
Coefficient for segment 3 = etc.

The resulting set of coefficients represents how much on average each segment is shorter or longer than the average of the whole group. A segment with a coefficient of 1.0 needs no adjustment. If, for example, segment 47 has a coefficient of 0.5, this means it consistently generates PIT values half the width of the average of the whole set. If, for example, segment 82's coefficient is 1.5, it consistently generates PIT values 50% longer than the average of the whole set. These coefficients can now be used to adjust the calculated flow rate for each segment as follows:-

Suppose one pulse is generated every time a volume of 10 Litres passes through the meter. Let $PIT_{1147}$ be 2.486 seconds and $PIT_{1182}$ be 3.915 seconds. $PIT_{1147}$ was generated by segment 47 which we know, in our example above, is consistently half the average time. $PIT_{1147}$ should therefore really be 2.486 X 2 = 4.972 seconds and the associated flow rate 10 Litres/ 4.972 = 2.011 Litres/second. Similarly, $PIT_{1182}$ generated by segment number 82, in our example above, is consistently 50% longer than the average time. Its PIT value should really be 3.915 X 0.667 = 2.610 seconds. Its associated flow rate will be 10/2.61= 3.831 Litres/second.

Another way of making the same compensation is to adjust the nominal volume scaling for each pulse. Thus in the above example, PIT values from segment 82 are taken as being the times taken for 10 X 1.5 Litres to pass through the meter. In which case, the flow value associated with $PIT_{1182}$ is calculated as 10 X 1.5/3.915 = 3.831 Litres/second.

### 1.2 Practical calculation of compensation coefficients

It is proposed that the logger should read into memory the complete nightline sequence of raw PIT values, i.e. values obtained from the pulse head without any adjustment or compensation. These would then be processed at the end of the nightline to provide compensation coefficients which are synchronised with the raw PIT sequence.

Another possibility is for the logger to carry out the compensation calculations adaptively whilst in the course of conventional logging. The risk with this approach is loss of synchronisation if the pulse head was for any reason temporarily taken off the meter body. If the interruption of the pulse stream was detected by, for instance, measuring an abnormally high PIT value, the adaptive calculation would have to be restarted. If it was not detected, the coefficient estimates would be invalidated.

It has been common practice to stack more than one pulse head on meter bodies. This practice has never been recommended because it generates noise in the pulse train or causes meters to stall. To avoid this practice, a signal pass through system is proposed in which one pulse head will be attached to the meter body and pulses from this will be monitored by the logger and copied to output ports to which other logging equipment can be attached. The 'copy' output ports can be made to mimic standard pulse head interfaces.

### Other types of meter.

Although pulse-type meters are those most commonly employed, analogue-type meters are also sometimes used and the invention is also applicable to measurements taken using analogue type meters.

Some pulse type meters show oscillatory variation in PIT values, as shown in Figure 2C. The oscillation is unstable and so cannot be compensated for by the method described above. The present invention enables these oscillations to be filtered out either by averaging PIT values or their equivalent flows over fixed or variable numbers of PIT values, (e.g. ten PIT values) or over fixed or variable time intervals (e.g. ten seconds). The averaging may be over non-overlapping sequential groups of values or over overlapping groups of values.

### 2 Calculation of averaging period to smooth out cyclic hydraulic artefact.

Even when the measurement artefact has been removed, residual pronounced cyclic behaviour often persists unrelated to any obvious user activity. These oscillations distort measurements of baseline nightline values and must also be eliminated.

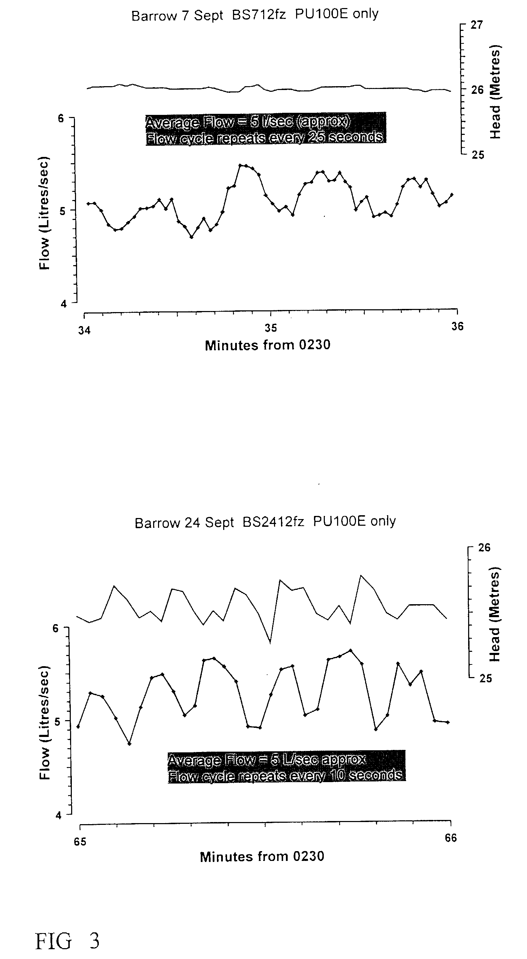

Figure 3 shows two high-resolution views of nightlines taken from the same District Meter Area. In the top graph, a cycle repeating every 25 seconds can be observed while, in the lower graph, a 10 second cycle is evident. It is to be noted that, in the two cases, the average flow is about the same, i.e. 5 litres/sec, so the meter is rotating at the same speed. This rules out the possibility of the oscillation being due to residual measurement artefact which had not been cancelled. If this were the case, the cyclic behaviour would have the same frequency in both plots. This cyclic variation is referred to as "cyclic hydraulic artefact" and implementation of this aspect of the invention is as follows:

**2.1 calculating a representative autocorrelation array.**

The raw flow data sequence (of PIT values or other measurements) is transformed via, for example, linear interpolation to a regular sequence of values spaced at, for example, 1 second intervals. This sequence (the base sequence) might comprise 7200 values if the logger is analysing a 2 hour nightline. Other lengths of nightline may be analysed in like manner.

The algorithm proceeds by dividing the base sequence into a series of 119 X 120 value overlapping data blocks. The first data block holds base values 1 to 120. The second data block holds base values 61 to 180........ the last holds base values 7081 to 7200 etc. (other data block lengths and overlaps could be used). For each 120 value data block proceed as follows:

The 120 sample data block can be called "S2". The logger copies the first 60 samples of S2 into a new sequence called S1 and which has values $s1_1, s1_2, s1_3...s1_{60}$. The logger now mathematically compares S1 with successive sets of 60 consecutive samples drawn out of S2, each successive set of S2 being one second later than the previous set. So the logger starts by comparing S1 with the first 60 values in S2, i.e. values $s2_1, s2_2, s2_3...s2_{60}$. Since the two sequences are of course the same, they match or correlate exactly. Next the logger compares S1 with the next set of S2 values delayed by 1 second, i.e. values $s2_2, s2_3, s2_4...s2_{61}$. The logger records the degree of comparison and continues with the next set of S2 values, i.e. $s2_3, s2_4, s2_5...s2_{62}$ etc. The logger stops when it has completed the final comparison of S1 with the last set of values in S2, i.e. $s2_{61}, s2_{62}, s2_{63}...s2_{120}$. The mathematical comparison is the autocorrelation function:

$$r_{12}(j) = \frac{\sum\limits_{n=o}^{N-1} S_1(n) S_2(n+j)}{\sum\limits_{n=0}^{N-1} S_1^2(n) \sum\limits_{n=0}^{N-1} S_2^2(n)}$$

in which $r_{12}(j)$ is the autocorrelation coefficient corresponding to the correlation of sequences S1 of evenly spaced samples with sequence S2, in which sequence S2 is sequence S1 advanced by j samples.

This produces a value of +1 when S1 matches S2 exactly and both sequences increase and decrease in phase and a result of -1 when S1 exactly matches S2 but the sequences are in opposite phase. A value of zero indicates no matching at all. For example, if there is a sub-signal buried in S2 which repeats every 30 seconds, the resulting set of correlation coefficients will tend towards +1 at the 1st and 31st comparisons and will tend towards -1 near the 15th and 45th comparisons. In this example, the correlation coefficient cycle repeats every 30 samples. *In general, periodic components buried in noise in any time signal will show up as periodic oscillations in the autocorrelation coefficient. In this invention, autocorrelation is useful because it emphasises periodic hydraulic oscillations while rejecting random fluctuations.*

The resulting set of 60 correlation coefficients for the first 120 value data block is stored in the first column of an array which may be called R[119][60], i.e. in positions R[1][1].....R[1][60]. When the next data block is analysed, the resulting set of 60 correlation coefficients is stored in positions R[2][1].....R[2][60].

When all 119 sequences have been completed, the logger calculates an average set of correlation coefficients, which may be called Rseg[60], by summing and averaging each of the jth elements in R[][j] such that

Rseg[1] = (R[1][1] + R[2][1] + R[3][1]+......R[119][1])/119

Rseg[2] = (R[1][2] + R[2][2] + R[3][2]+......R[119][2])/119,

etc.

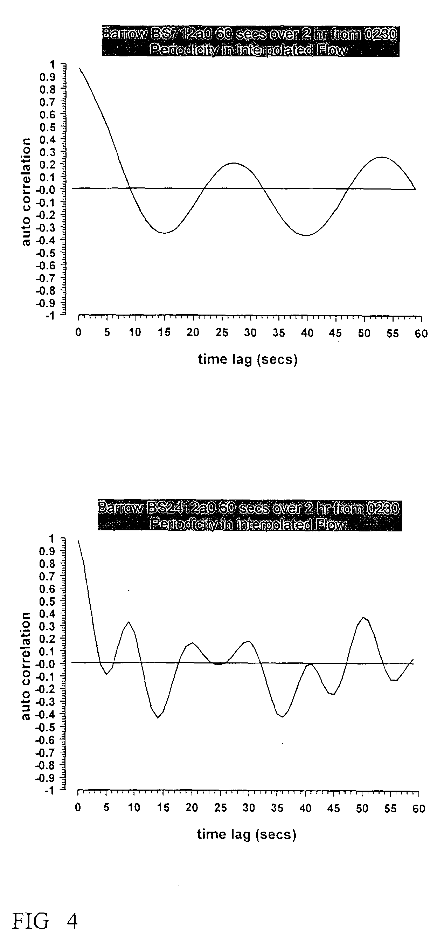

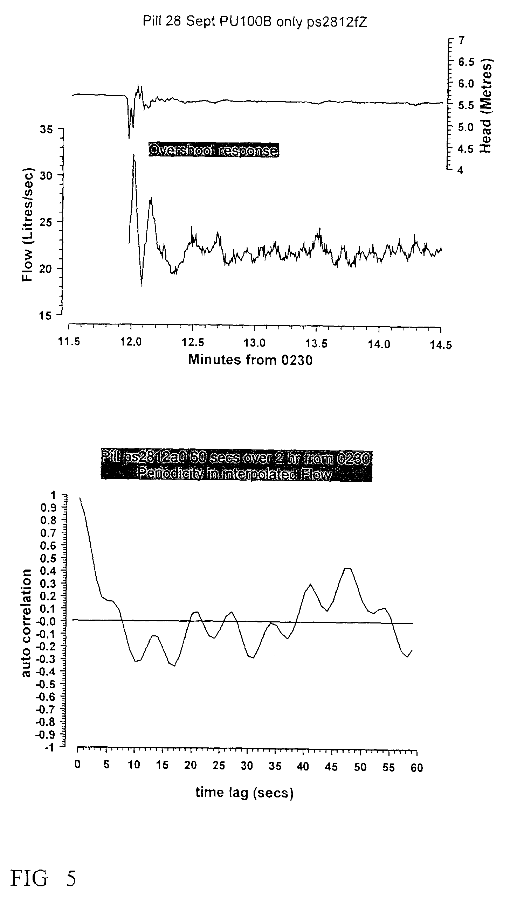

Rseg[] is an average correlation array for the whole two hour nightline. Typical examples of such arrays are shown in Figures 4 and 5.

Next the logger analyses the average correlation array to determine the underlying oscillatory period. To do this it proceeds as follows:

**2.2 Determining the optimum averaging period from the autocorrelation array.**

The logger searches the array for the first qualifying minimum value such that the next occurring maximum value minus the qualifying minimum value is greater than some predetermined threshold limit. This eliminates early false minima. The logger then locates the positions of all the following maxima and minima using the same separation threshold limit. The resulting number of half periods are then averaged and doubled to provide an estimate of the shortest repeat period.

If no qualifying minimum is found, a default period is used.

**2.3 Other variations on a theme.**

In this system, the logger determines an average correlation array from calculations on the whole two-hour night line. It would be possible to split the 2 hour nightline into smaller parts and to determine separate correlation arrays (and associated repeat periods) for each part. Other lengths of nightline can be treated in the same way.

In the analysis of the correlation array Rseg[], the logger determines the shortest repeat period. It would also be possible to extract the longest repeat period or intermediate repeat periods.

In this system, the logger determines an optimum repeat period by autocorrelating the flow data. Other repeat periods could be determined by autocorrelating the pressure data or cross-correlating the flow data with the pressure data.

In this system, the logger has used autocorrelation. In an alternative form, it would be possible to use other frequency analysis techniques such as Fourier analysis (DFT or FFT) to find the shortest, longest or intermediate repeat periods

**3 Removal of transient hydraulic artefact**

Sudden hydraulic disturbances, such as the starting of pumps, can generate major surges or transients in networks causing the measured flows to oscillate strongly about mean values. The troughs of these oscillations are difficult to distinguish from genuine short-term reductions in user demand.

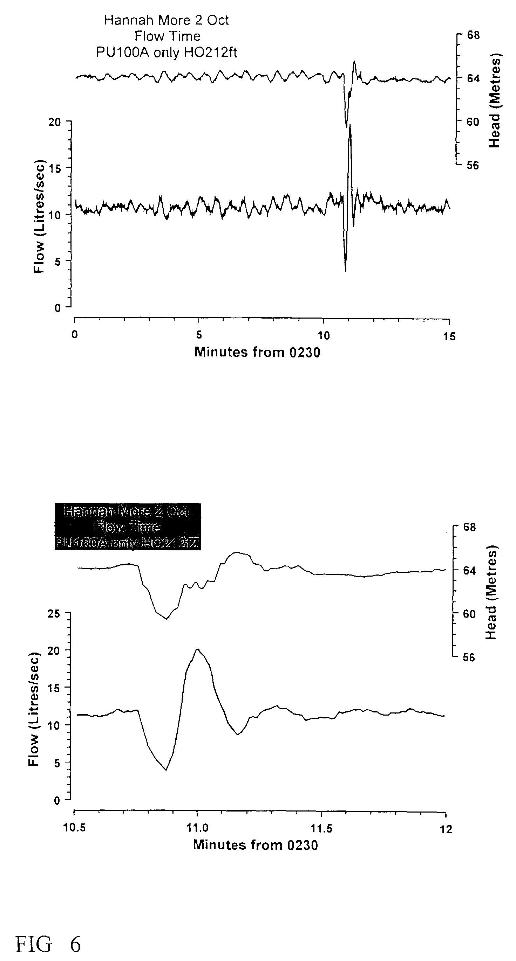

Figure 6 shows an example in which the top graph clearly illustrates how the normal flow pattern is disturbed. The lower graph is a detailed view of the transient. In this instance, the most reliable method of detecting flow surges is to check for accompanying transients in the pressure characteristic. A typical peak-to-peak transient pressure change is at least 2 metres, which is clearly different from normal pressure changes. Thus, as a first line of defence against false readings, the logger checks for pressure transients. It scans the nightline pressure record with a fixed length moving window (herein called the qualification time window). A pressure transient is detected if the difference between any two pressure samples within the qualification time window exceeds a predetermined threshold.

Let us define a pressure change threshold as P_LIMIT /QT, where P_LIMIT (the change in head or pressure) is typically 1 metre head. QT is the fixed length qualification time window and is typically 15 seconds.

Let us also define a flow deceleration limit as F_LIMIT/QT,

in which the change in flow rate F_LIMIT is typically 7.5% of the night line minimum 15 minute average flow rate. QT is the same qualification time as used for the pressure change threshold.

Let us also define WAIT (typically 2 minutes) which is the skip time which is invoked if the pressure change threshold is crossed. It is the time allowed for the pressure oscillation to die away.

The details of implementation are discussed in the next section.

**4 Finding a minimum night flow measurement**

**4.1 Brief recap of steps so far**

The logger reads in a night line of flow and pressure data (typically two hour's worth).

The logger compensates the flow data for measurement artefact. If the compensated data is unevenly spaced, it interpolates it to generate evenly spaced samples at, for example, 1 second intervals.

The logger autocorrelates the flow data to determine the optimum averaging period to smooth out hydraulic oscillations. Let us call this period NSEQ seconds.

Now the logger proceeds to scan the interpolated data to find the minimum night flow value as follows:

**4.2 Scanning for a minimum night flow measurement**

*If the QT period is longer than the autocorrelation period NSEQ, the logger proceeds as follows:*

**Step 1.** The logger reads in a block of interpolated data QT seconds long. If the difference between any two pressure samples within QT exceeds P_LIMIT, a transient has occurred so the logger skips the next WAIT seconds worth of data and repeats step 1. Otherwise it goes to step 2.

**Step 2.** If the pressure limit is not exceeded, the logger checks that the difference between any two flow values within QT does not exceed F_LIMIT. If F_LIMIT is exceeded, the logger suspects that a transient has occurred in which case it shuffles the QT window along by 1 second and repeats step 1. Otherwise it goes to step 3.

**Step 3.** The logger scans within the QT window with a moving sub window NSEQ seconds long. The logger calculates the average of the first NSEQ samples and stores this as a datum value. The logger moves along 1 second and calculates the average again. If it is lower than the datum, the logger replaces the datum with this new value. This is repeated until the logger reaches the end of the QT window. The logger now moves the QT window along 1 second and repeats from Step 1 until it has scanned all the values in the nightline. The datum flow value is the best measurement of the minimum flow value for the nightline.

*If the QT period is shorter than the autocorrelation period NSEQ, the logger proceeds as follows:*

**Step 4.** The logger reads in a block of interpolated data NSEQ seconds long. Within this block, the logger scans with a moving sub window QT seconds long. If the difference between any two pressure samples within QT exceeds P_LIMIT, the logger knows that a transient has occurred so it skips the next WAIT seconds worth of data and repeats step 4. Otherwise it goes to step 5.

**Step 5.** If the pressure limit is not exceeded, the logger checks that the difference between any two flow values within QT does not exceed F_LIMIT. If F_LIMIT is exceeded, it suspects that a transient has occurred in which case it shuffles the NSEQ window along by 1 second and repeats step 4. Otherwise it goes to step 6.

**Step 6.** The logger calculates the average of the first NSEQ samples and stores this as a datum value. It moves the NSEQ block along 1 second and repeats steps 4, 5 and 6. If the new average calculated in step 6 is lower than the datum value, it replaces the datum value with this new value. When all the nightline values have been scanned, the resulting datum flow value is the best measurement of the minimum flow value for the nightline.

### 4.3 Variations

The development algorithm described in Steps 1, 2 and 3, and 4, 5 and 6 above is not optimal in terms of avoiding duplicated scans. It is possible to speed up the algorithm by carrying out a check to see whether the average flow in the current NSEQ period is less than the current datum value. If it is not, then that particular time segment is ignored when looking for the minimum flow period.

### 5 Estimating baseline leakage

### 5.1 Description

The logger applies all the measurement techniques so far described (except transients which are treated differently). Thus, given a nightline data record, it:

i) Removes measurement artefact.
ii) Interpolates at 1 second or other regular intervals (if data is not evenly spaced).
iii) Determines optimum averaging time by autocorrelating the interpolated flow data.
iv) Calculates sequential averages for the flow data ( e.g. suppose the autocorrelation reveals an optimum averaging time of 18 seconds. Then it takes the first 18 values, averages them and stores the result. Next it takes values 19 to 36, averages them and stores the result. Next it takes values 37 to 54, averages them and stores the result, etc.)
v) Checks pressure record for hydraulic transients using P_LIMIT/QT criterion (refer to Section 3 above). When a transient is detected, it smoothes the flow record over the following WAIT seconds rounded up to the nearest whole number of averaging periods. ( e.g. if the averaging period is 18 seconds and WAIT is 120 seconds, it smoothes over 7 X 18 seconds = 126 seconds.)

At this stage, the logger has reduced the original data to a set of sequential average values which we may term micro values (e.g. suppose the original data interpolates to 7200 values spaced at 1 second intervals and the averaging period is 18 seconds then, after averaging, there will be 7200/18 = 400 micro values.)

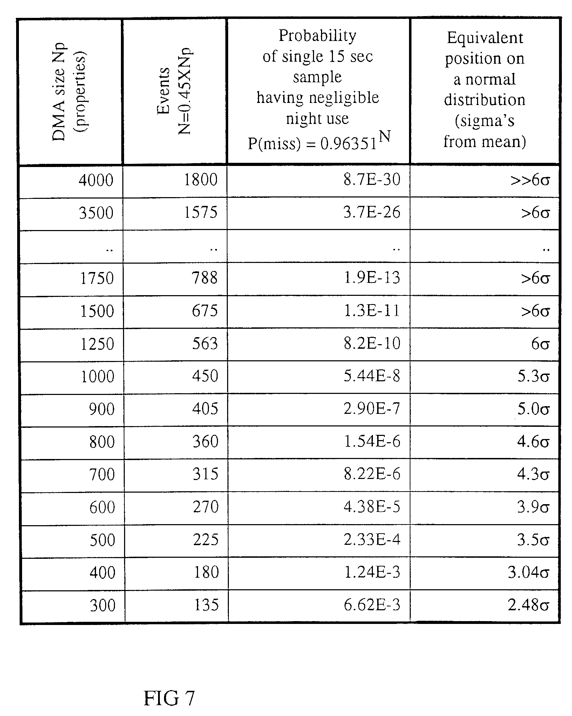

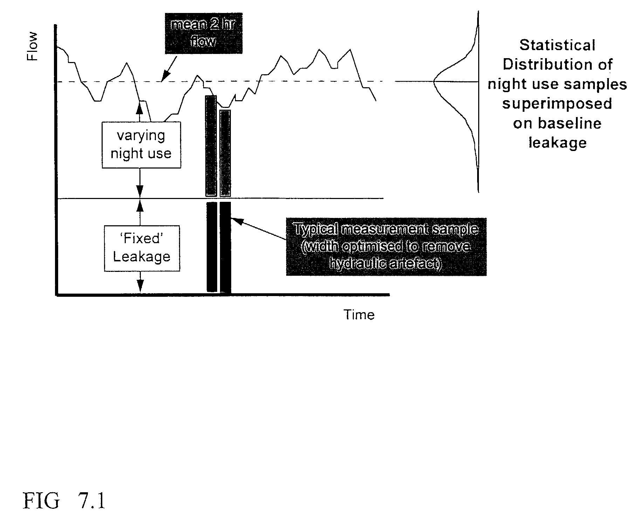

The system now considers each of these micro values to be comprised of two components, i.e. user flow and leakage flow. The model considers that, approximately, the leakage flow does not vary from micro value to micro value. Micro value variation is therefore due to changing use during the nightline as shown in the drawings, particularly Figure 7.1.

The crux of the problem is thus to determine an appropriate statistical model for the micro value variation and to infer from this model the lowest potential limit of user flow given the size and type of the network being monitored.

The system models the micro value variation as a normal distribution. To this end the logger calculates the two hour mean of all the values and the standard deviation of the values about this mean. Either it or the host processing system then uses the example data in column 4 of Figure 7 to determine the lowest potential limit of user flow in terms of standard deviations from the mean for different sized networks.

A feature of this system is that as the user flow on a site increases, so too will there be a tendency for the standard deviation of the flow micro values to rise. Because a fixed multiple of the standard deviation is subtracted from the nightline mean, more is subtracted from the mean to automatically compensate for the increased use. Increased leakage on the other hand does not affect the standard deviation but simply shifts the whole distribution towards higher flow values.

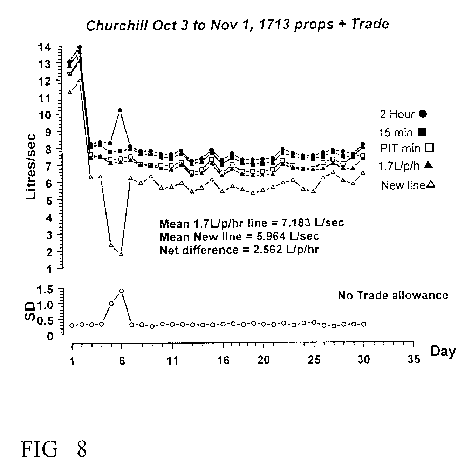

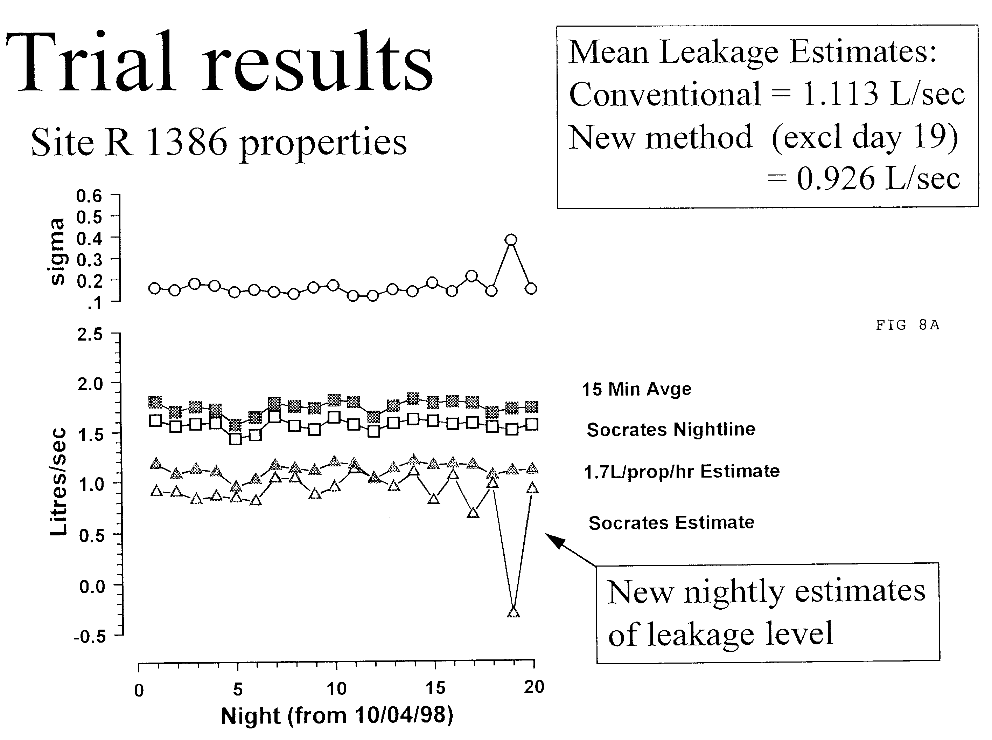

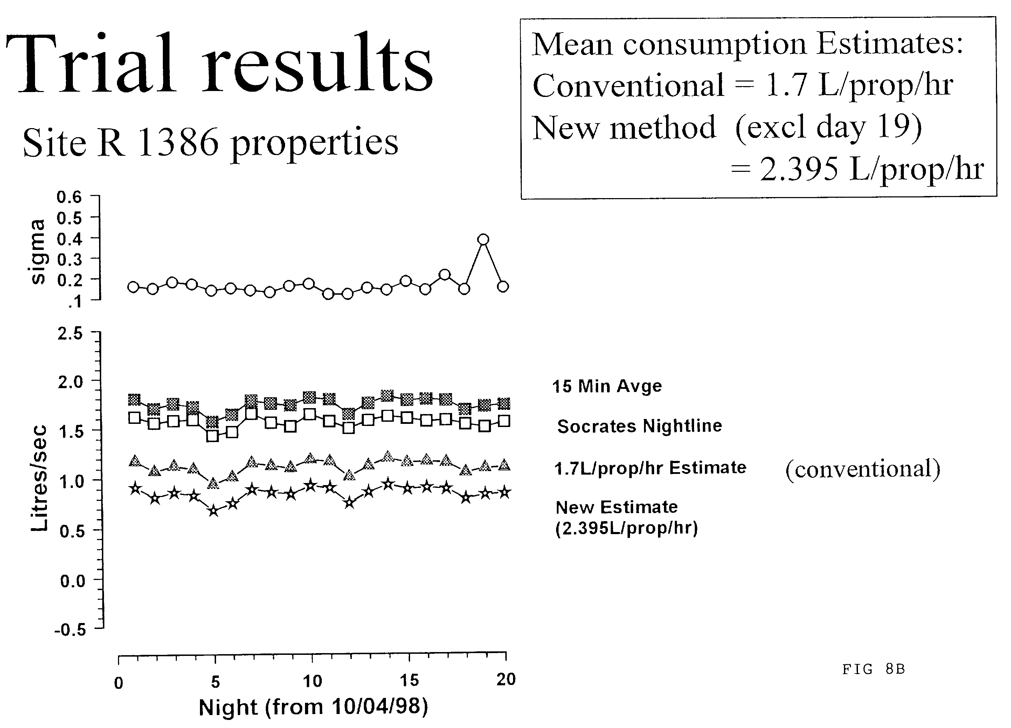

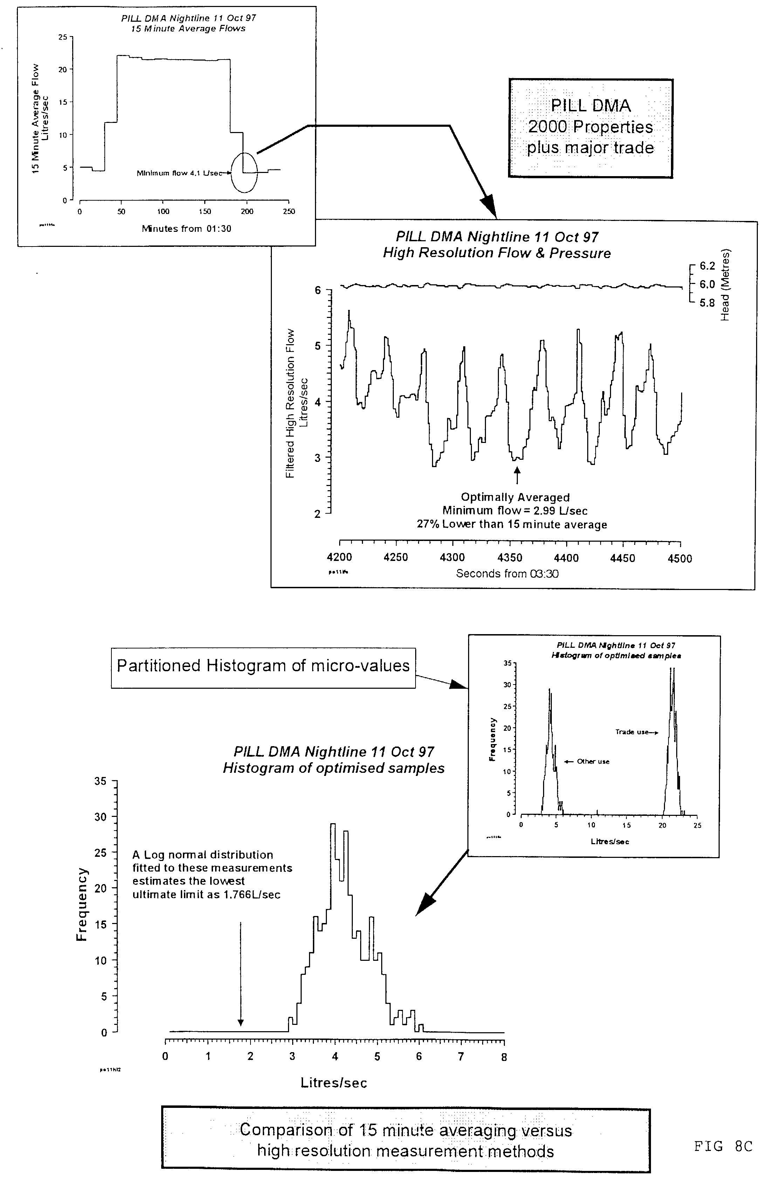

A further feature is that the standard deviation value is sensitive to changes in the pattern of use. Uncharacteristically large standard deviations are noted when industrial use occurs (e.g. Figure 8). This provides a warning signal to ignore leakage estimates based on that night's data.

A further feature of the invention is that it enables an estimate to be made of customer night use expressed in, for example, litres per property per hour (l/prop/hr). Conventionally, a global figure is assumed for this entity, typically 1.7 L/prop/hr. At individual network level, this conventional approach is very inaccurate as customer night use varies substantially from night to night. From a series of nightly leakage estimates calculated by the methods described herein, an average value of leakage can be calculated for a given sequence of nights, as shown in Figure 8A. This value can be subtracted from the average flow over the same sequence of nights. This result, expressed in litres per hour and divided by the number of properties in the network being investigated yields a customer night use value which reflects the actual level of customer activity on the network - see Figure 8B.

The invention enables an estimate to be made of the extent of intermittent water consumption by industrial, trade or other exceptional users. This use has been difficult to quantify and has resulted in inaccurate estimates which lead to confusion as to the likely level of leakage in a network. Figure 8C (i) shows an example of an approximately l5L/sec change in flow caused by a major trade user. Figure 8C (ii) shows a portion of the lower level flow which itself has an intermittent trade process use superimposed. In the situation illustrated in Figure 8C (ii) the invention enables a measurement to be obtained of the minimum flow value between the periods of industrial use which is substantially different to that obtained using a conventional approach.

Figure 8C (iii) shows how the system can be adapted to construct a histogram of micro values for a given period so that, where there are distinct levels of flow during the monitoring period, as in the example shown in Figure 8C (i), the histogram comprises distinct portions. The higher portions may be attributed to trade or other exceptional users and the lowest portion may be attributed to minor users (including domestic users). The system of separating user flow from leakage flow described above may now be applied to the lower portion, as shown in Figure 8C (iv).

## 5.2 Variations on a theme

Normal distributions have been assumed for the pattern of average values about the nightline mean. This may not always be valid. A more sophisticated system would find the best fitting statistical model for each nightline; for instance, log normal, inverse gaussian, gamma, etc. An alternative method is to fit a curve to the lower half of the distribution from the mode (peak) back towards the left-hand axis. Where this curve cuts the flow rate axis may be taken as another estimate of the leakage level.

As described in Section 4, the system determines a minimum flow measurement for each nightline. Over a series of nightlines, these minima will have a statistical distribution from which the lowest possible flow might be inferred given the size and type of the network being monitored.

## 6. Diagnosing Network Control Problems.

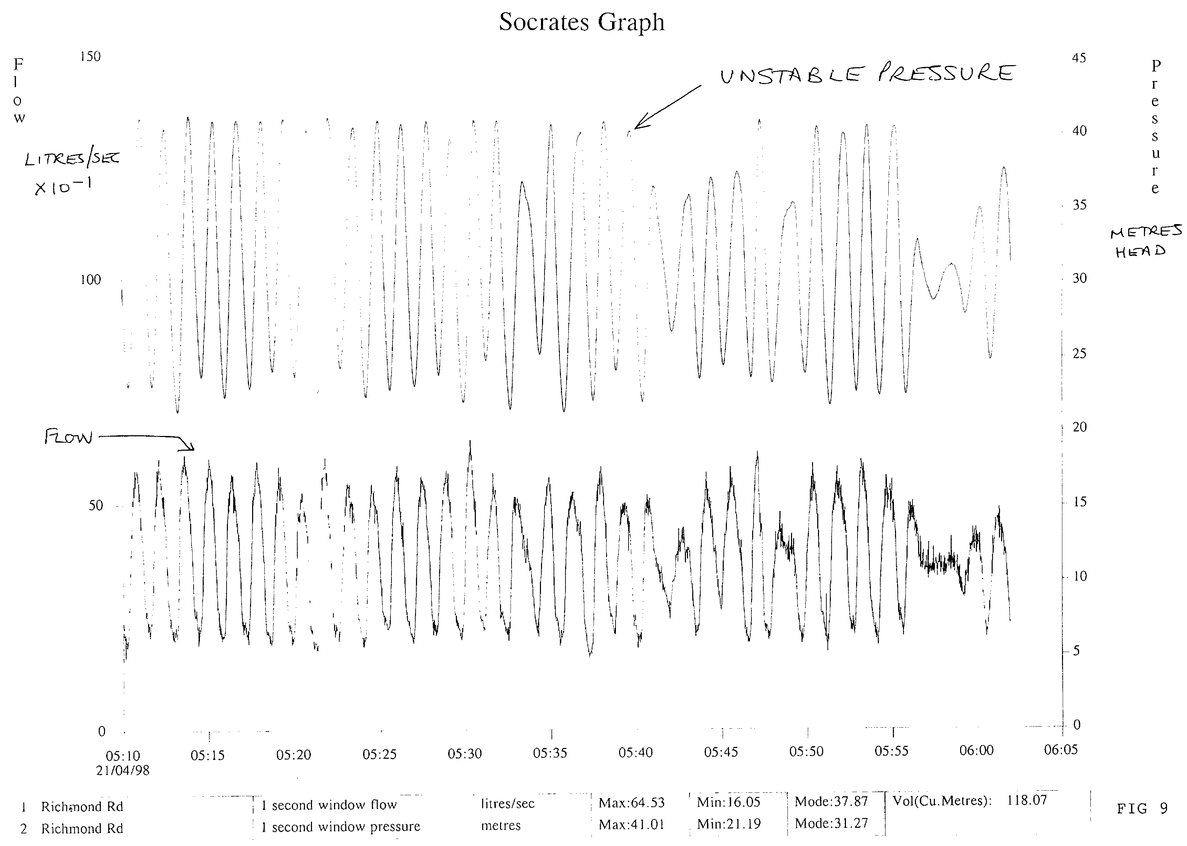

When readings are obtained showing flow rates and pressures at high resolution (i.e. measured at a frequency of 1 per second or more) and stripped of measurement artefact, these provide an opportunity of checking the operation of pressure regulating valves. These normally aim to stabilise the water pressure at, for example, 31 metres pressure and it has traditionally been assumed that there have been only minor variations from the norm. Measurements obtained using the system of the present invention have, however, shown that the pressure can oscillate rapidly and substantially about set point values causing unnecessary wear and tear on control equipment, pipework cyclic stresses and higher rates of leakage, see Figure 9. It will be appreciated that a higher rate of leakage occurs when the pressure is higher. Significant savings can thus be obtained by appropriate corrective action on the pressure regulating valves.

**7. Monitoring Minimum Flows and Pressures in Consumption Monitor Areas**

It is common practice to investigate water consumption patterns of small groups of typically 1 to 200 statistically representative households served by single feed networks. Of particular interest in these networks is the minimum night flow as this will be at or very near the leakage level. Any flow above this level may be treated as variable consumption by users.

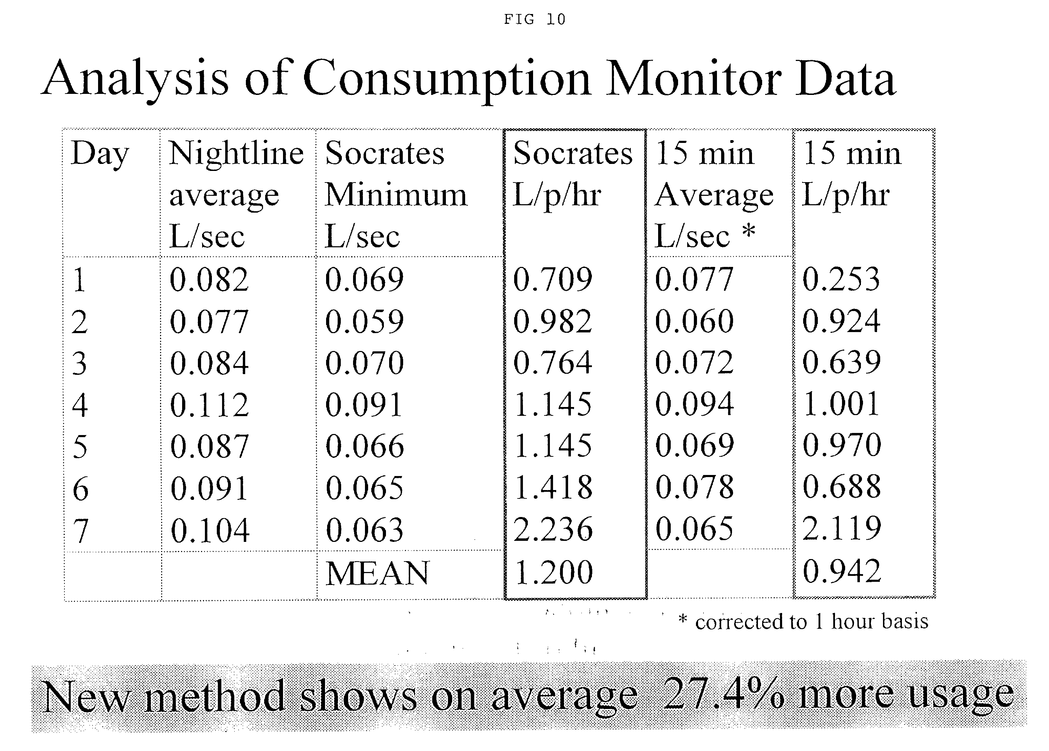

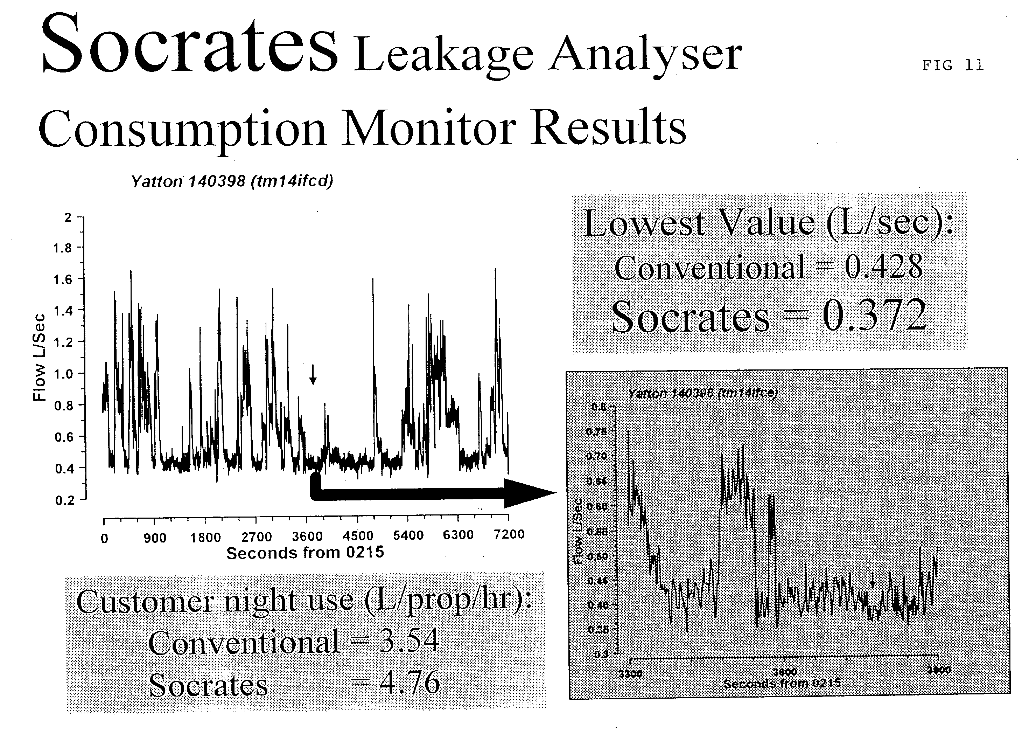

The method of the present invention, which more accurately determines the minimum flow in this application compared to conventional methods (see Figures 10 and 11), may be adapted to record the pressure at the feed point of a network accurately synchronised with the time of minimum flow measurement. Then, for a large number of readings of minimum flows and associated pressures from the same site or group of sites, it is possible to determine an empirical relationship between leakage and pressure. This is important for the control and measurement of leakage.

**Claims**

1. A method of measuring minimum flow which includes taking account of "measurement artefact" and/or "hydraulic transient artefact" and/or "hydraulic cyclic artefact".

2. A method as claimed in Claim 1, which is carried out using a flow meter which generates pulses in response to flow, the method including measuring the intervals between successive pulses and converting the time interval measurements to flow measurements.

3. A method as claimed in Claim 2, in which the time intervals are measured between the leading edges of successive pulses and in which the arrangement is such that, having detected a potential leading edge, that leading edge will be ignored if the next "falling" edge is less than a specified number of milliseconds away.

4. A method as claimed in Claim 2, in which the time intervals are measured between the trailing edges of successive pulses and in which the arrangement is such that, having detected a potential trailing edge, that trailing edge will be ignored if the next "rising" edge is less than a specified number of milliseconds away.

5. A method of measuring minimum flow using a flow meter, which method comprises obtaining a number of measurements by the method claimed in Claim 1 and ascertaining the optimum number of measurements over which to average to obtain an accurate flow measurement.

6. A method of determining leakage which includes carrying out the method of any one of the preceding claims.

7. A measurement system comprising a data logger and analysis computer in combination, the logger and computer being adapted to perform the measurement method of any one of Claims 1 to 5.

8. A measurement system as claimed in Claim 7, in which the data logger is adapted merely to measure and memorise the individual time intervals, with the other steps of the method being performed by the computer.

9. A measurement system as claimed in Claim 7 or Claim 8, which includes means for providing a high resolution read-out of both flow and pressure against time.

10. A method as claimed in any one of claims 1 to 5, which includes providing a high resolution read-out of both flow and pressure against time.

Fig 1

Normal Pulses

time ———→

Jitter Pulses

Fig 1A

Fig 2

FIG. 2A

FIG. 2B

Thick line = compensated

Flow (Litres/sec)

Head (Metres)

Minutes from 0230

**Fig 2C** Showing unstable oscillatory variation at PIT level for stable but different flows on the same meter

FIG 3

FIG 4

Pill 28 Sept PU100B only ps2812fZ

FIG 5

FIG 6

| DMA size Np (properties) | Events $N=0.45 \times Np$ | Probability of single 15 sec sample having negligible night use $P(miss) = 0.96351^N$ | Equivalent position on a normal distribution (sigma's from mean) |
|---|---|---|---|
| 4000 | 1800 | 8.7E-30 | >>6σ |
| 3500 | 1575 | 3.7E-26 | >6σ |
| .. | .. | .. | .. |
| 1750 | 788 | 1.9E-13 | >6σ |
| 1500 | 675 | 1.3E-11 | >6σ |
| 1250 | 563 | 8.2E-10 | 6σ |
| 1000 | 450 | 5.44E-8 | 5.3σ |
| 900 | 405 | 2.90E-7 | 5.0σ |
| 800 | 360 | 1.54E-6 | 4.6σ |
| 700 | 315 | 8.22E-6 | 4.3σ |
| 600 | 270 | 4.38E-5 | 3.9σ |
| 500 | 225 | 2.33E-4 | 3.5σ |
| 400 | 180 | 1.24E-3 | 3.04σ |
| 300 | 135 | 6.62E-3 | 2.48σ |

FIG 7

FIG 7.1

Churchill Oct 3 to Nov 1, 1713 props + Trade

FIG 8

EP 0 882 952 A2

# Trial results

## Site R 1386 properties

Mean Leakage Estimates:
Conventional = 1.113 L/sec
New method  (excl day 19)
= 0.926 L/sec

FIG 8A

15 Min Avge

Socrates Nightline

1.7L/prop/hr Estimate

Socrates Estimate

New nightly estimates
of leakage level

# Trial results

## Site R 1386 properties

Mean consumption Estimates:
Conventional = 1.7 L/prop/hr
New method  (excl day 19)
= 2.395 L/prop/hr

15 Min Avge

Socrates Nightline

1.7L/prop/hr Estimate    (conventional)

New Estimate
(2.395L/prop/hr)

sigma axis: 0.6, 0.5, 0.4, 0.3, 0.2, .1

Litres/sec axis: 2.5, 2.0, 1.5, 1.0, 0.5, 0.0, -0.5

Night (from 10/04/98): 0, 5, 10, 15, 20

FIG 8B

Comparison of 15 minute averaging versus high resolution measurement methods

FIG 8C

Socrates Graph

FIG 9

FIG 10

# Analysis of Consumption Monitor Data

| Day | Nightline average L/sec | Socrates Minimum L/sec | Socrates L/p/hr | 15 min Average L/sec * | 15 min L/p/hr |
|---|---|---|---|---|---|
| 1 | 0.082 | 0.069 | 0.709 | 0.077 | 0.253 |
| 2 | 0.077 | 0.059 | 0.982 | 0.060 | 0.924 |
| 3 | 0.084 | 0.070 | 0.764 | 0.072 | 0.639 |
| 4 | 0.112 | 0.091 | 1.145 | 0.094 | 1.001 |
| 5 | 0.087 | 0.066 | 1.145 | 0.069 | 0.970 |
| 6 | 0.091 | 0.065 | 1.418 | 0.078 | 0.688 |
| 7 | 0.104 | 0.063 | 2.236 | 0.065 | 2.119 |
|  |  | MEAN | 1.200 |  | 0.942 |

\* corrected to 1 hour basis

New method shows on average 27.4% more usage

EP 0 882 952 A2

# Socrates Leakage Analyser
# Consumption Monitor Results

FIG 11

Yatton 140398 (tm14ifcd)

Lowest Value (L/sec):
Conventional = 0.428
Socrates = 0.372

Customer night use (L/prop/hr):
Conventional = 3.54
Socrates = 4.76